# EUROPEAN PATENT APPLICATION

(11) **EP 2 868 628 A1**
(43) Date of publication of application: **06.05.2015**
(21) Application number: 13190852.7
(22) Date of filing: 30.10.2013
(51) Int. Cl.: C01B 33/12, C01B 37/00

(54) **Process for preparing a silicon dioxide composition**

(71) Applicant: BASF SE, 67056 Ludwigshafen (DE)
(72) Inventor: The designation of the inventor has not yet been filed
(74) Representative: Reitstötter Kinzebach

(57) **Abstract**

The present invention relates to a process for preparing a silicon dioxide composition comprising mesoporous silicon dioxide particles itself and a use thereof. In particular, the present invention relates to a process for preparing silicon dioxide composition with particulate structure and having high BET (Brunauer-Emmet-Teller) surface area and excellent sorption properties. The process is based on using water glass as a cheap precursor, which is precipitated by controlled addition of acid in the presence of surfactant as structure directing agent at constant pH values.

## Description

### BACKGROUND OF THE INVENTION

The present invention relates to a process for preparing a silicon dioxide composition comprising mesoporous silicon dioxide particles itself and a use thereof. In particular, the present invention relates to a process for preparing silicon dioxide composition with particulate structure and having high BET (Brunauer-Emmet-Teller) surface area and excellent sorption properties. The process is based on using water glass as a cheap precursor, which is precipitated by controlled addition of acid in the presence of surfactant as structure directing agent at constant pH values.

### STATE OF THE ART

The discovery of the mesoporous silica compounds MCM-41 and SBA-15 in the 1990's has led to a wide field of mesoporous material development that encompasses ever more new structures, compositions and functionalities. These materials are of use in a range of different applications such as adsorption, separation and catalysis due to their high surface-to-volume ratios and well-defined uniformly porous structures, which give rise to unique surface properties. Another application field is in controlled release of active agents, e.g. in pharmaceutical industry, which takes advantage of strong interaction between the large surface and the active agents. Therefore, a number of attempts have been made in order to prepare mesoporous silicon dioxide-containing powders.

In an elementary publication, Beck et al. (J. Am. Chem. Soc., 1992, 114, 10834) described a solvothermal synthesis of mesoporous silica materials based on several commercially available silica precursors like HiSil and UltraSil (brand names), tetraethyl orthosilicate (TEOS), tetramethylammonium silicate (TMA) or sodium silicate. Most of the silica precursors were reacted with surfactant compounds and further reagents by placing the reaction solution in an autoclave for one or two days. Sodium silicate was added with sulphuric acid for gelation and subsequently mixed with an aqueous solution of cetyltrimethylammonium bromide (CTAB) followed by hydrothermal ripening at 100°C for 144 hours and calcining the resulting solid under air at 540°C.

In US 5,102,643 a very broad use of organic templates in combination with sources of metal oxides has been disclosed for preparing mesoporous materials (e.g. molecular sieves), in particular the M41 S family of molecular sieves, which were described therein for the first time. As the silica sources, tetraalkylammonium silicates and/or precipitated silica materials like HiSil or Ludox (brand name) are disclosed, which are obtained by solvothermal synthesis or ripening in an autoclave. The resulting mesoporous powders did not consist of defined particles.

US 5,198,203 represents a continuation of the above-mentioned US 5,102,643 and is directed to mesoporous materials with given pore sizes and a geometry characterised by means of X-ray diffraction. As the silica source, TEOS was exemplified which has been reacted with alkylammonium hydroxide templates.

US 5,238,676 represents another continuation of the above-mentioned US 5,102,643 and US 5,198,203. Therein, post-synthetic modifications of mesoporous silica materials by incipient wetness have been claimed, wherein the silica materials were prepared by using a solvothermal synthesis based on silica dispersion of HiSil. As an example, alumina and aluminates were introduced into the silica materials in order to prepare silico-aluminate based materials.

In US 6,096,288 a synthesis of mesoporous silica materials starting from less expensive and easier to handle silica precursors like commercially available Ludox, HiSil or Ultrasil has been described. The synthesis included a reaction in an autoclave at 150°C for up to 20 hours.

Cai et al. (Chem. Mater., 2001, 13, 258) described a method for obtaining mesoporous particles which is based on an aqueous reaction medium of NaOH and CTAB under high dilution. Another high dilution method for obtaining mesoporous nanoparticles has been published by Nooney et al. (Chem. Mater., 2002, 14, 4721). According thereto, the synthesis must be conducted under a dilution of, e.g., 1 ml to 4 ml of TEOS per 800 ml solvent. Both high dilution methods were based on TEOS as the precursors and resulted in mesoporous silica materials having BET surfaces of typically 900 m²/g to 1000 m²/g.

The use of block copolymers as templates for making mesoporous oxidic materials has been claimed for the first time in US 6,592,764. Therein, the synthesis of mesoporous silica materials was based on acid catalysed hydrolysis of a TEOS precursor in the presence of copolymers based on polyethylene oxide - ethylene oxide (PEO - EO). The resulting mesoporous powders have been called "SBA-15" and were characterised by large pores and enhanced stability compared to the aforementioned M41 S materials.

Liu et al. (Journal of Colloid and Interface Science 2008, 319, 377) described a fast and easy synthesis of mesoporous silica materials by reacting silica gel in a basic aqueous medium in the presence of CTAB in an autoclave for 2 hours at 100°C. The resulting powder had a BET surface of 1270 m²/g and did not consist of well defined mesoporous nanoparticles.

The unpublished EP 12178056.3 relates to a microcapsule composition as core-shell particles and a method of making them. The microcapsule composition comprises a core of a lipophilic liquid or viscous substance surrounded by a shell of amorphous silica of various thicknesses. The method is based on emulsification of the liquid or viscous substance in water using different emulsifying agents and forming the shell by a sol-gel process in which the condensation of the silica precursor is done by simultaneously adding the silica precursor (metal-silicates or silicic acid) and an acid or base to the emulsion and thus keeping the pH constant during addition in a pH range of 6 to 9.

US 6,221,326 B1 describes a method for preparing hollow particles comprising a dense silica shell, by precipitating active silica from an aqueous alkaline metal silicate on a core constituted in a material other than silica and by eliminating the material without destroying the silica shell.

WO 2010/003762 A1 relates to particles having a core/shell/shell configuration, wherein the core present in the interior of each particle comprises at least one organic active agent that is difficult to dissolve in water, or that is water insoluble. The inner shell mandatorily comprises a biodegradable polymer, preferably gelatin, casein or caseinate, as protective colloide. This document does not teach to add a water glass solution and an acid or a silicic acid solution and a base to an aqueous dispersion comprising the organic active ingredient and to keep the pH in a range of 6 to 9 during the addition. In the process according to WO 2010/003762 A1 a solution of sodium silicate is added to a suspension of the organic active ingredient and afterwards the pH value is adjusted only once to a value in the range of from 6 to 9.

Summarising the prior art, up to now the synthesis methods are based on energy-intensive solvothermal processes, for instance in an autoclave, or require high dilution conditions, while most of them are time-consuming.

It is an object of the present invention to provide a process for the preparation of a silicon dioxide composition which is easily upscaleable to industrial quantities, which overcomes the drawbacks of the prior art and does not require energy-intensive, high dilution and/or time-consuming processes. Further, it is an object of the present invention to provide an improved process for the preparation of a silicon dioxide composition which comprises mesoporous silicon dioxide particles. Further, it is an object of the present invention to provide a silicon dioxide composition which comprises mesoporous silicon dioxide particles. Moreover it is an object of the present invention to provide a silicon dioxide composition for the use as an adsorbent, as or in a column material, as or in a coating of nanoparticles, as or in the active material of a catalyst, as or in a catalyst support.

Surprisingly these objects could be achieved by a process for the preparation of a silicon dioxide composition using water glass as silica source.

### SUMMARY OF THE INVENTION

Therefore, the present invention relates to a process for the preparation of a silicon dioxide composition, which comprises mesoporous silicon dioxide particles, wherein
a) providing an aqueous solution comprising at least one surfactant (S) and
b) adding to the aqueous solution provided in step a) a water glass solution and an
   acidifying agent (A),
wherein the addition is effected that the pH of the resulting mixture is in the range from 6 to 9.

A preferred embodiment is a process, wherein
- a target value for the pH of the resulting mixture is predefined,
- the actual value of the pH is determined,
- when a lower or higher limit for the deviation of the actual pH from the target value of the pH of the resulting mixture is reached, the amount of acidifying agent (A) or water glass solution required for adjusting the pH value of the resulting mixture to the target value which is determined,
- the required amount of acidifying agent (A) or water glass solution is added to the aqueous solution by the use of an adjusting means for setting the dosing rate of the acidifying agent (A) and/or the water glass solution.

### DEATIL DESCRIPTION IF THE INVENTION

The process according to the invention allows the feasible and effective preparation of silicon dioxide, which comprises mesoporous silicon dioxide particles. Furthermore, the inventive silicon dioxide composition can be used in a great variety of applications, such as adsorbent, as or in a coating of nanoparticles, as or in active material of a catalyst or as or in a catalyst support. Moreover, a great variety of different active material (e.g. suitable organic and inorganic nanoparticles, suitable particles with catalytic activity, surface modifying agents, flame retardant additives, construction additives, anti-corrosive agents, anti-fouling agents, dyes, pharmaceutically active substances) can be fixed to the composition. Moreover, by utilizing water glass as a silica containing precursor, a cheap starting material is used that allows a cost-effective production.

One of the objects of the present invention was to synthesize silicon dioxide composition, which comprises mesoporous silicon dioxide particles. Furthermore, these mesoporous silicon dioxide composition were used as absorbance for active materials, e.g. mineral binder, flame retardant additives, construction additives, anti corrosive agents, dyes, pharmaceutical auxiliaries, cosmetically active substances, particles with catalytic activity.

In the context of the present invention, a silicon dioxide composition consist of at least 90% by weight, preferably at least 95% by weight, in particular at least 99% by weight, of is silica (SiO₂). The silicon dioxide composition may contain minor amounts of further covalently bound atoms, in particular C and/or P.

The term "mesoporous silicon dioxide particles" used herein is understood in a broad sense and means a silicon dioxide particles which have generally a pore size from 2 to 50 nm. The pore size is determined by the method of Barett, Joyner and Halende (BHJ, DIN 66131). The surface area is determined by the method of BET (DIN 9277).

In the context of the invention, plasticizers are additives that modify the rheology properties of a material e.g. that increase the plasticity or fluidity.

In the context of the invention, superplasticizers are additives that modify the rheology and at the same time allow the reduction of the solvent. This is of particular importance for concrete applications.

### Step a)

In step a) the aqueous solution comprising at least one surfactant (S) is provided. According to an embodiment of the invention, the surfactant is a micelle building agent selected from the group comprising block copolymers, anionic surfactants, cationic surfactants, non ionic surfactant and amphoteric surfactants, in particular of a betaine type, or a mixture thereof, preferably cationic surfactants.

The cationic surfactants include, for example, quaternized ammonium compounds, in particular alkyltrimethylammonium and dialkyldimethylammonium halides and alkyl sulfates, and also pyridine and imidazoline derivatives, in particular alkylpyridinium halides.

The anionic surfactants include, for example, carboxylates, in particular alkali metal, and ammonium salts of fatty acids, e.g. potassium stearate, which are usually also referred to as soaps; acyl glutamates; sarcosinates, e.g. sodium lauroyl sarcosinate; taurates; methylcelluloses; alkyl phosphates, in particular mono- and diphosphoric acid alkyl esters; sulfates, in particular alkyl sulfates and alkyl ether sulfates; sulfonates, further alkyl- and alkylarylsulfonates, in particular alkali metal and ammonium salts of arylsulfonic acids, and also alkyl-substituted arylsulfonic acids, alkylbenzenesulfonic acids, such as, for example, ligno- and phenolsulfonic acid, naphthalene- and dibutylnaphthalenesulfonic acids, or dodecylbenzenesulfonates, alkylnaphthalenesulfonates, alkyl methyl ester sulfonates, condensation products of sulfonated naphthalene and derivatives thereof with formaldehyde, condensation products of naphthalenesulfonic acids, phenolic and/or phenolsulfonic acids with formaldehyde or with formaldehyde and urea, mono- or dialkylsuccinic acid ester sulfonates; and protein hydrolyzates and lignosulfite waste liquors. The aforementioned sulfonic acids are advantageously used in the form of their neutral or optionally basic salts.

The nonionic surfactants include, for example:
- fatty alcohol polyoxyethylene esters, for example lauryl alcohol polyoxyethylene ether acetate,
- alkyl polyoxyethylene and polyoxypropylene ethers, e.g. of isotridecyl alcohol and fatty alcohol polyoxyethylene ethers,
- alkylaryl alcohol polyoxyethylene ethers, e.g. octylphenol polyoxyethylene ether,
- alkoxylated animal and/or vegetable fats and/or oils, for example corn oil ethoxylates, castor oil ethoxylates, tallow fatty ethoxylates,
- glycerol esters, such as, for example, glycerol monostearate,
- fatty alcohol alkoxylates and oxo alcohol alkoxylates, in particular of the type RO-(R₁₈O)ᵣ(R₁₉O)ₛR₂₀ where R₁₈ and R₁₉ independently of one another = C₂H₄, C₃H₆, C₄H₈ and R₂₀ = H or C₁-C₁₂-alkyl, R = C₃-C₃₀-alkyl or C₆-C₃₀-alkenyl, r and s independently of one another are 0 to 50, where both cannot be 0, such as isotridecyl alcohol and oleyl alcohol polyoxyethylene ether,
- alkylphenol alkoxylates, such as, for example, ethoxylated isooctyl-, octyl- or nonylphenol, tributylphenol polyoxyethylene ether,
- fatty amine alkoxylates, fatty acid amide and fatty acid diethanolamide alkoxylates, in particular their ethoxylates,
- sugar based surfactants, sorbitol esters, such as, for example, sorbitan fatty acid esters (sorbitan monooleate, sorbitan tristearate), polyoxyethylene sorbitan fatty acid esters, alkyl polyglycosides, N-alkylgluconamides,
- alkyl methyl sulfoxides,
- alkyl dimethylphosphine oxides, such as, for example, tetradecyl dimethylphosphine oxide.

In a preferred embodiment the surfactant is at least one cationic ones chosen from the group of n-alkyltrimethylammonium halides, like cetyltrimethylammonium bromide (CTAB), cetyltrimethylammonium chloride (CTAC), or cetyltrimethylammonium hydroxide.

The concentration of the surfactant in the aqueous solution can be between 0.1 wt.-% to 10 wt.-%, preferably 0.8 wt.-% to 1.2 wt.-% based on the weight of total weight of the aqueous solution.

According to a further embodiment of the present invention the aqueous solution providing in step a) comprises optionally at least one additive, which is selected from surface modifying agents, pH regulating agents, pore expanding agents and mixtures thereof.

Appropriate surface modifying agents may be chosen from alkanolamines, polyalkylene oxide homo- and copolymers, fatty alcohols, silanes, metal alkoxides, and mixtures thereof.

Suitable alkanolamines are ethanolamine, n-propanolamine, 2-amino-2-methylpropanol, isopropanolamine, n-butanolamine, pentanolamine, hexanolamine, heptanolamine or octanolamine, N-alkylalkanolamines, such as N-methylethanolamine, N methylisopropanolamine, N-ethylethanolamine, N-ethylisopropanolamine, N,N-dialkylalkanolamines, such as N,N-dimethylethanolamine, N,N-dimethylpropanolamine, N,N-diethylethanolamine, dialka-nolamines, such as diethanolamine, di-n-propanolamine or 2-amino-2-methyl-1,3-propanediol, N-alkyldialkanolamines, such as N methyl-diethanolamine and preferably C₈ C₁₈-alkyldialkanolamines, trialkanolamines, such as triethanolamine or tri-n-propanolamine, and mixtures thereof. In the C₈-C₁₈-alkyl-dialkanolamines, the alkyl radicals are preferably chosen from n-octyl, n-nonyl, n decyl, n-undecyl, n-dodecyl, n-tridecyl, n-tetradecyl, n-pentadecyl, n-hexadecyl, n heptadecyl and n-octadecyl. These include n-octyldiethanolamine, n nonyldiethanolamine, n-decyldiethanolamine, n-undecyldiethanolamine, n dodecyldiethanolamine, n-tridecyldiethanolamine, n-tetradecyldiethanolamine, n pentadecyldiethanolamine, n-hexadecyldiethanolamine, n-heptadecyldiethanolamine or n-octadecyldiethanol-amine.

Preferred alkanolamines are monoethanolamin, diethanolamine, triethanolamine and mixtures thereof.

Suitable polyalkylene oxide homo- and copolymers are polyalkylene glycols, e.g. poly-ethylene glycols, polypropylene glycols, polytetrahydrofurans, etc., copolymers of ethylene oxide and propylene oxide or block copolymers of ethylene oxide, propylene oxide and/or butylene oxide which comprise the copolymerized alkylene oxide units in random distribution or in the form of blocks. Suitable are also polyalkylene oxide block copolymers with polyolefines.

Suitable fatty alcohols are saturated or mono- or polyunsaturated C₆-C₃₀-fatty alcohols, such as lauryl alcohol, stearyl alcohol, oleyl alcohol, myristryl alcohol, cetyl alcohol, the hydrogenation products of naturally occurring fatty acids or fatty acid mixtures, such as coconut fatty alcohol, technically available alcohols and alcohol mixtures, such as oxo alcohols. The afore-mentioned fatty alcohols can also be employed in form of any mixture.

Suitable silanes are alkyltrialkoxysilanes such as n- octyltrimethoxysilane, n-octyltriethoxysilane, isooctyltrimethoxysilane, dodecyltrimethoxysilane, octadecyltri-methoxysilane, propyltrimethoxysilane, and hexyltrimethoxysilane; methacryloxy-alkyltrialkoxysilanes or acryloxyalkyltrialkoxysilanes such as 3-methacryloxypropyl-trimethoxysilane, 3-acryloxypropyltrimethoxysilane, and 3-(methacryloxy)propyltri-ethoxysilane; methacryloxyalkylalkyldialkoxysilanes or acryloxyalkylalkyldialkoxysilanes such as 3-(methacryloxy)propylmethyldimethoxysilane, and 3-(acryloxypropyl)-methyldimethoxysilane; methacryloxyalkyldialkylalkoxysilanes or acyrloxyalkyldialkylalkoxysilanes such as 3-(methacryloxy)propyldimethylethoxysilane; mercaptoalkyltrialkoxylsilanes such as 3-mercaptopropyltrimethoxysilane; aryltrialkoxysilanes such as styrylethyltrimethoxysilane, phenyltrimethoxysilane, phenyltriethoxysilane, and p-tolyltriethoxysilane; vinyl silanes such as vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, and vinyltris(2-methoxyethoxy)silane; 3-glycidoxypropyltrialkoxysilane such as glycidoxypropyltrimethoxysilane; polyether silanes such as N-(3-triethoxysilyl-propyl)methoxyethoxyethoxyethyl carbamate (PEG3TES), N-(3-triethoxysilylpropyl) methoxyethoxyethoxyethyl carbamate (PEG2TES), SILOUEST ® A- 1230, and combinations thereof.

Preferred alkoxy silanes are tetraethoxysilane (TEOS) and tetramethoxysilane (TMOS).

Suitable metal alkoxides are alkaline alkoxides, earth alkaline alkoxides, group 4 (Ti-group) alkoxides, e.g. Zirconium(IV) butoxide, Titanium(IV) propoxide, Titanium(IV) butoxide, Aluminium tert-butoxide.

Appropriate pH regulating agents are known to a person skilled in the art, but buffer systems based or acetic acid, carbonate buffer systems or hydrogenphosphate/dihydrogenphosphate buffers are preferred.

Appropriate pore expanding agents, for example low molecular weight pore expanders, can be added to adjust the pore size. Suitable pore expanders are aliphatic or alicyclic hydrocarbons, aromatics, amines or mixture thereof e.g. trialkyl benzenes (in particular trimethyl benzenes), hexane, decane, N,N-dimethylhexadecylamine, N,N-dimethyl-decylamine, N,N-dimethyloctylamine.

In order to influence and modify the particle and/or pore shape of the resulting silicon dioxide composition, electrolytes can be added into the aqueous solution provided in step a). Suitable electrolytes are inorganic salts, containing for example at least one cation, preferably selected from lithium, potassium or sodium and at least one anion preferably selected from nitrate, sulphate, chloride or perchlorate. With pore expanding agents the materials tend to have less ordered structure. Larger amounts of electrolytes, e.g. KCI, together with trialkyl benzenes results in wormlike pores. Addition of defined amounts of electrolytes e. g. NaCl, KCI, etc. will result in particles with more spherical shape.

In another embodiment of the invention, the aqueous solution provided in step a) obtains entities which are embedded into the mesoporous silicon dioxide particles. The aqueous solution provided in step a) comprises at least one particle (P) and/or at least one active agent (Z) which are different from mesoporous silicon dioxide particles, wherein the particle (P) and/or the active agent (Z) are at least partly incorporated into the mesoporous silicon dioxide particles. For example hydrophobic active agents (Z) or particles (P) can be dissolved in the aqueous solution providing in step a) which results in an inclusion of P and Z in hydrophobic cores of the micelles. Proceeding the step b) with an aqueous solution comprising least one particle (P) and/or at least one active agent (Z) will result in mesoporous silicon dioxide particles which are filled with P and/or Z.

The particles (P) are selected from organic nanoparticles, inorganic nanoparticles, particles with catalytic activity, precursors thereof and mixtures thereof e.g. polystyrene beads, carbon beads, ceramic beads, e.g. siliceous beads, alumina, titania or zirconia, suitable metal alkoxides or transition metal acetates e. g. Zirconium(IV) butoxide, Titanium(IV) propoxide, Titanium(IV) butoxide, Aluminum tert-butoxide, Palladium (II) acetate, Zinc acetate.

Suitable organic and inorganic nanoparticles are precious metal nanoparticles, metal oxide nanoparticles or pigments. Embedding of organic and inorganic nanoparticles in the mesoporous silica dioxide particles is of significances especially for catalysis and controlled release. The process can be seen also as coating of the organic and inorganic nanoparticles with mesoporous silica dioxide.

Suitable particles with catalytic activity or precousores thereof are e. g. oxides, carbonyls, phosphines, amides, amines, alkoxides, alkoxylates, metallic particles and mixtures thereof of at least one metal, preferably selected from Au, Rh, Ce, Ag, Cu, Pd, Fe, Co, Ru, La, Co, Mn, Pt, Cr, Mo, Nb, Ir, Zu, Sn, In and mixtures thereof. Suitable metal alkoxides or transition metal acetates e. g. Zirconium(IV) butoxide, Titanium(IV) propoxide, Titanium(IV) butoxide, Aluminum tert-butoxide, Palladium (II) acetate, Zinc acetate.

The active agent (Z) are selected from additives of mineral binder, flame retardant additives, construction additives, anti corrosive agents, anti-fouling agents, dyes, pharmaceutically active substances, pharmaceutical auxiliaries, cosmetically active substances, cosmetic auxiliaries, dyes, UV-stabilizers, UV-protecting agents, fragrances, flavors, encapsulated active agents and mixtures thereof.

Suitable additives (Z) of mineral binders are selected from flame retardant additives, concrete levelling agents, concrete plasticizer and superplasticizer, concrete shrinkage reducing agents, air pore formers, expansion agents, hydrophobicizing agents, setting retarders, setting accelerators, frost protection agents, sealants, pigments, corrosion inhibitors, levelling agents, grouting aids, anti-fouling agents, anti-fouling aids, stabilizers, antifoams, gypsum additives, hollow microspheres or mixtures thereof. Such additives are described, for example in EN 934.

Suitable flame retardant additives are halogen-containing flame retardants e.g. brominated flame retardants, preferred polybrominated bisdiphenylethers, polybrominated biphenyls or further brominated hydrocarbons. Preferred brominated flame retardants are pentabromodiphenyl ether (PentaBDE), octabromodiphenyl ether (OctaBDE) and decabromodiphenyl ether (DecaBDE), tetrabromobisphenol A (TBBPA), hexabromocyclododecane (HBCD), particularchlorendic acid (1,4,5,6,7,7-hexachlorobicyclo[2.2.1]-hept-5-ene-2,3-dicarboxylic acid), chlorinated paraffins; nitrogen-based flame retardants e.g. melamine, urea; organophosphorus flame-retardants e.g. aromatic and aliphatic organophosphates, organophosphonates, organophosphinates or organophosphorus compounds containing at least one halogen atom. Preferred organophosphorus flame-retardants are tris(2-chloroethyl) phosphate (TCEP), tris(1-chloro-2-propyl) phosphate (TCPP), tris(1,3-dichloro-2-propyl) phosphate (TDCPP), triphenyl phosphate (TPP), triethyl phosphate, isodecyl diphenyl phosphate, tris-(2-ethylhexyl) phosphate (TEHP), tri-n-butyl phosphate, tri-isobutyl phosphate, tricresyl phosphate (TCP), isopropylated triphenyl phosphate (ITP) with different isopropyl rates (e.g. mono-, bis- and tris- isopropyl phenyl phosphate), resorcinol-bis(diphenyl phosphate) (RDP), bisphenol-A-bis(diphenyl phosphate) (BDP) and mixtures thereof.

Suitable concrete leveling agents and/or concrete plasticizers and superplasticizers are compounds based on naphthalene-formaldehyde condensate sulfonate, melamineformaldehyde condensate sulfonate, phenolsulfonic acid-formaldehyde condensate, polycarboxylate ether-based superplasticizers, graft copolymers of e.g. polyethyleneoxide (PEO) and maleic anhydride, co-polymers of acrylic acid, maleic acid and/or polymerizable PEG chains like vinyl PEG or PEG acrylic acid esters, lignosulfonates, gluconates, polyurethane, polyvinyl chloride, polyimide, silicone resins and silicone combination resins.

Suitable construction additives are selected from plasticizers, superplasticizers, shrinkage reducing agents, corrosion inhibitors, defoaming agents, retardants, accelerators, seeding agents, concrete levelling agents, hydrophobization agents, accelerators for cementitious systems and mixtures thereof.

Suitable hydrophobization and shrinkage reducing agents are silicon oil, reactive siloxanes, calcium soaps e.g. calcium stearate; hemiterpene alcohol e.g. isoprenol and fluore-based organo-compounds.

Suitable deforming agents comprise, in particular, agents based on polyalkylene oxides, trialkyl phosphates, such as tributyl phosphate and silicone-based defoaming agents. The ethoxylation products and propoxylation products of alcohols having from 10 to 20 carbon atoms are likewise suitable. The diesters of alkylene glycols or polyalkylene glycols and further customary antifoams are likewise suitable. Deforming agents are usually used in amounts of from 0.05% by weight to 10% by weight, preferably from 0.5 to 5% by weight, based on the silicon dioxide composition.

Suitable dyes are triphenylmethane (e.g. fluoresceine, rhodamine-types, crystal violet), azo-dyes (e.g. Sudan blue, red, etc.), anthrachinone, cyanine dyes (e.g. Cy 5, Cy7), coumarins and derivatives, pyrenes and derivatives. Suitable inorganic pigments are e.g. aluminum, cobalt, iron, manganese, chromium, cadmium, coppe, titanium, tin, antimony, barium, vanadium, zinc, carbon pigments.

Suitable encapsulated active agents are e.g. corrosion inhibitors e.g. succinic esters; cosmetic auxiliaries, pharmaceutical and plant protection compounds e.g. Resorcinol bis(diphenyl Phosphate) ibuprofene, estradiol, clotrimazole.

Suitable inorganic nucleation agents are are talc, mica, wollastonite, clay, kaolin, diatomaceous earth, bentonite, montmorillonite, hydrotalcite, calcium carbonate, titanium oxide, potassium titanate, asbestos, or barium oxide.

Suitable chemiluminescent dyes are e.g. luminol, 2,4,5-Triphenylimidazole, 9,10-Bis(phenylethynyl)anthracene. Suitable phosphorescent dyes are e. g. ZnS.

### Step b)

In step b) the water glass solution and the acidifying agent (A) are added to an aqueous solution comprising at least one surfactant (S) employed in step a).

The term "water glass" used herein is the common name for a compound comprising sodium silicate, in particular sodium or potassium metasilicate (Na₂SiO₃ / K₂SiO₃), which is readily soluble in water and produces an alkaline solution. In neutral and alkaline solutions water glass is stable, but in acidic solutions the silicate ion forms silicic acid. Water glass is also characterized by the molar ration of SiO₂ and alkali oxide (for example Na₂O). Commercial water glass has a molar ration of from 1 to 4. The water glass module according the invention is preferably 2.4 to 3.4. It is of a critical importance that the process of the invention a pH is in a certain range maintained. One preferred procedure for maintaining the pH constant is the application of an in situ pH electrode coupled to dosing pumps, which adjust the addition rates of the acidifying agent and the water glass, respectively. However, even more sophisticated automated reactor systems may be applied.

The water glass solution is preferably added as a solution containing 0.1 % by weight to 35% by weight SiO₂, preferably 1 % by weight to 30% by weight SiO₂, in particular 2% by weight to 25% by weight SiO₂ based on the total weight of the water glass solution.

In another embodiment of the invention the water glass solution comprises at least one metal oxide precursor. Suitable metal oxide precursor according the present invention are oxides of e.g. zirconium, titanium, cerium, iron, copper, zinc, and tin, in particular aluminium.

The term "acidifying agent (A)" used herein is understood in a broad sense and means an acidifier. It has been found favourable if the acid is an inorganic acid, an aqueous solution of an inorganic acid, organic acid or an aqueous solution of an organic acid. Particular examples of the inorganic or organic acid are nitric acid, sulphuric acid, hydrochloric acid, phosphoric acid, acetic acid, formic acid, citric acid. Metal salts, giving aqueous solutions with a pH value lower than 8 can be taken also as acidifier.

In step b) of the process according to the invention, the water glass solution and the acidifier are added to the aqueous solution comprises a surfactant. The addition is effected in a way that the pH value of the resulting reaction solution is in the range from 6 to 9, preferably 7 to 9, in particular 7.5 to 8.9.

In order to adequately maintain the pH of the resulting reaction solution during the addition, water glass and the acid are added in parallel through two separate inlets. Preferably, the maintaining of a constant pH is carried out by adjusting the addition speed of water glass solution and/or the acidifying agent throughout the addition period.

In another embodiment, the maintaining of a constant pH is carried out by adjusting the addition volume of water glass solution and/or the acidifying agent throughout the addition period.

Suitable devices for controlling the pH of the resulting mixture are known to those skilled in the art. Suitable devices for adjusting the addition speed or the addition volume are known to those skilled in the art. In a suitable embodiment a combination of pH controlling devices and for adjusting the addition speed or the addition volume are used.

Suitable devices for controlling the rate of introduction of the water glass solution and/or acidifying agent (A) into the aqueous solution in step b) are selected from among flow limiters, metering valves and metering pumps. In a suitable embodiment, a combination of at least one pump and at least one flow limiter and/or at least one metering valve is used for controlling the rate of introduction. In a preferred embodiment, at least one metering pump is used for controlling the rate of introduction of the water glass solution and / acidifying agent (A) into the aqueous solution in step b). The metering pump simultaneously takes on the functions of all system components which are otherwise necessary, e.g. pump, metering valve, optionally shutoff valve, etc. Suitable metering pumps are known to those skilled in the art and have the task of transporting accurate amounts of liquid. Such pumps can be, for example, diaphragm pumps or piston pumps.

In a preferred embodiment, the process of the invention comprises a device for regulating the amount and the speed of the water glass solution and/or the amount and the speed of the acidifying agent (A) into the aqueous solution provided in step b) as a function of actual value of the pH value. Then, they convert, for example, the electronic signals (e.g. commands from the control computer) into an appropriate mechanical increase or reduction in the inflow rate of the water glass solution or acidifying agent (A) in step b) and thus exert a regulating effect in the regulating system used to the invention.

In general, the addition of the water glass solution in step b) is carried out in a range from 60 to 95°C, preferably in a range from 70 to 90°C, in particular at in a range from 75 to 85°C

The weight ration of the surfactant and the silica in the solution can be between 1:0.1 to 1:2, preferably between 1:1.25.

According to a further embodiment, in step b) the addition of water glass and acid into the aqueous solution is normally effected over a period of 0.5 minutes to 24 hours, preferably for a period of 1 minute to 14 hours.

In a preferred embodiment of step b) the addition rate of water glass and/or acid to the aqueous solution providing in step a) is 200 mL to 300 mL per hour based on 1 L of the resulting mixture, preferably 50 mL to 200 mL per hour based on 1 L of the resulting mixture, in particular 40 mL to 120 mL per hour based on 1 L of the resulting mixture.

In a preferred embodiment, after adding the water glass solution employed in step a), the aqueous solution is reacted for 5 minutes to 12 hours, preferably for 30 minutes to 4 hours. As a rule, the aqueous solution is reacted at a temperature in the range of from 60°C to 95°C, preferably from 70°C to 90°C, in particular from 75°C to 85°C.

In addition to the above-mentioned moderate temperatures and ambient conditions, the method of the present invention does not require time-consuming processes, but represents a time-efficient method allowing for the production of large quantities a silicon dioxide composition comprises mesoporous silicon dioxide particles.

### Step c) and step d)

After the reaction in step b) is complete, the silicon dioxide composition, comprising mesoporous silicon dioxide particles is usually obtained as a dispersion in an aqueous solvent.

Depending on the intended use, it is possible to employ this aqueous dispersion without a further isolation or purification step. In a preferred embodiment of the present invention the silicon dioxide composition may be recovered from the dispersion obtained in step b). Recovery of the silicon dioxide composition can be achieved by any known liquid removal technique, for example by filtering, centrifugation, spray drying, spray chilling, oven drying or lyophilisation, preferably by spray drying.

Optionally, the dispersion of silicon dioxide composition obtained in step b) can be subjected to a further purification step prior to the isolation of the silicon dioxide composition. For example the dispersion of silicon dioxide composition obtained in step b) can be subjected to a cross- flow-filtration. The cross-flow - filtration can be carried out in a customary manner. As a rule, a cross flow is generated on the membrane surface at a speed of about 2.5 bis 3 m/s. In general the membrane consists of ceramic and has a pore size of about 20-40 nm. The dissolved salts are separated from the solution. As a rule, the electrical conductivity of the solution is about 30 microsimens after the cross-flow-filtration step. In another embodiment example the dispersion of silicon dioxide composition obtained in step b) can be subjected to a dialysis. The dialysis can be carried out in a customary manner.

The spray drying of the dispersion of silicon dioxide composition can be carried out in a customary manner. In general, the inlet temperature of the hot stream is in the rage from 100 to 200°C, preferably 120 to 160°C and the outlet temperature of the air stream is in the range from 30 to 90°C, preferably from 60 to 80°C. The spraying of the silicon dioxide composition dispersion in the hot air stream can be carried out, for example, by means of single-fluid or multifluid nozzles or by means of a rotating disk. The silicon dioxide composition is normally separated off by using cyclones or filters. The sprayed silicon dioxide composition dispersion and the hot air stream are preferably conveyed in concurrent.

In another embodiment the drying of the dispersion of silicon dioxide composition can be carried out at a temperature in the rage from 20 to 100°C for a period of 30 min to 15 h in combination with reduced pressure.

In another embodiment the drying of the dispersion of silicon dioxide composition can be carried out at a temperature in the rage from 20 to 100°C for a period of 30 min to 15 h.

A further advantage is to be seen in that the aqueous silicon dioxide compositions according to the invention can as a rule be dried to a redispersible powder. That is, by removal of the aqueous phase during the drying, a finely divided powder is obtained which can, without any problem, be redispersed in water without the occurrence of a significant change in particle size.

### Step e)

If appropriate, a calcination step e) is carried out.

Calcination is preferably carried out at a temperature in the range from about 200 to 800°C, particularly preferably from 250 to 700°C, more preferably from 300 to 600°C. Calcination is preferably carried out in a gas stream, in general a stream of air. The amount of gas used in the calcination (based on the amount of catalyst and the time) is, for example in the range from about 100 to 2000 l/l x h. The duration of the calcination is preferably at least 30 minutes, particularly preferably at least one hour. In general, a calcination time of not more than 24 hours, particularly preferably not more than 12 hours, is sufficient.

A further aspect of the present invention is a silicon dioxide composition comprises mesoporous silicon dioxide particles, obtainable by the method described above.

Preferably, the particles of the silicon dioxide composition according to the invention have an average particle size in the range of 20 to 500 nm, more preferably of 50 to 250 nm. The particle size can be determined by known methods, e.g. transmission electron microscopy (TEM) analysis or by light scattering.

Preferably, the silicon dioxide composition according to the invention has a pore size in the range from 1 to 25 nm, preferably from 2 to 10 nm (determined by BET analysis).

Preferably, the silicon dioxide composition according to the invention has a surface area of the silicon dioxide (determined by BET analysis) is at least in a range of 950 m²/g to 1350 m²/g, preferably at least in a range of 800 m²/g to 1150 m²/g.

This silicon dioxide composition shows excellent adsorption properties, and is further favourable in that its particular morphology allows for preparation of stabilised colloidal dispersions suitable for various applications.

### Preparations of mineral binders

The silicon dioxide composition according to the invention is useful for the delivery and release of an active substance that is an additive of mineral binders. The silicon dioxide composition is in particular suitable for the additization of cement-comprising preparations such as concrete or mortar and display, in particular, superior properties in terms of their fluidizing action.

For the purposes of the present invention, cement is, for example, portland cement, alumina cement or mixed cement, for example pozzolanic cement, slag cement or other types. The silicon dioxide composition of the invention are particularly suitable for cement mixtures which comprise, as cement constituents, predominantly and in particular at least 80% by weight, based on the cement constituent, of portland cement. The silicon dioxide compositions of the invention are for this purpose generally used in an amount of from 0.01 to 10% by weight, preferably from 0.05 to 3% by weight, based on the total weight of the cement in the cement preparation.

The silicon dioxide compositions of the invention are also particularly suitable for the additization of gypsum and gypsum-comprising preparations. The silicon dioxide composition of the invention are for this purpose generally used in an amount of from 0.01 to 10% by weight, preferably from 0.05 to 3% by weight, based on the total weight of gypsum in the gypsum preparation.

The silicon dioxide composition can be added in solid form or as an aqueous dispersion to the ready-to-use preparation of the mineral binder. It is also possible to formulate silicon dioxide composition in solid forms with the mineral binder and prepare the ready-to-use cement-comprising preparations from this mixture.

The silicon dioxide composition of the invention can also be used in combination with known flame retardant additives, as mentioned before.

The silicon dioxide composition of the invention can also be used in combination with known concrete levelling agents and/or concrete fluidizers based on naphthalene-formaldehyde condensate sulfonate, melamine-formaldehyde condensate sulfonate, phenolsulfonic acid-formaldehyde condensate, lignosulfonates and gluconates.

Furthermore, they can be used together with celluloses, e.g. alkylcelluloses or hydroxyalkylcelluloses, starches or starch derivatives. They can also be used in combination with high molecular weight polyethylene oxides (weight average molecular weight Mw in the range from 100 000 to 8 000 000 daltons).

Furthermore, customary additives such as air pore formers, expansion agents, hydrophobicizing agents, setting retarders, setting accelerators, frost protection agents, sealants, pigments, corrosion inhibitors, levelling agents, grouting aids, stabilizers or hollow microspheres.

The silicon dioxide composition of the invention can in principle also be used together with film-forming polymers. These are, for the purposes of the present invention, polymers whose glass transition temperature is ≤ 65°C, preferably ≤ 50°C, particularly preferably ≤ 25°C and very particularly preferably ≤ 0°C. A person skilled in the art will be able to choose suitable polymers with the aid of the relationship between glass transition temperature of homopolymers and the glass transition temperature of copolymers established by Fox (T.G. Fox, Bull. Am. Phys. Soc. (Ser.II) 1, 1956, 123). Examples of suitable polymers which are commercially available for this purpose are styrene-butadiene polymers and styrene-acrylates (cf., for example, B. H. Lutz in D. Distler (editor), "Wässrige Polymerdispersionen" Wiley-VCH, Weinheim 1999, Chapters 10.3 and 10.4, pp. 230-252).

Furthermore, it is often advantageous to use the comb polymers of the invention together with antifoaming agents. This prevents too much air being introduced in the form of air pores into the concrete when the ready-to-use mineral building materials are being prepared; such air pores would reduce the strength of the set of the mineral building material. Suitable antifoams comprise, in particular, antifoams based on polyalkylene oxides, trialkyl phosphates, such as tributyl phosphate and silicone-based antifoams. The ethoxylation products and propoxylation products of alcohols having from 10 to 20 carbon atoms are likewise suitable. The diesters of alkylene glycols or polyalkylene glycols and further customary antifoams are likewise suitable. Antifoams are usually used in amounts of from 0.05% by weight to 10% by weight, preferably from 0.5 to 5% by weight, based on the comb polymers.

The antifoams can be combined with the polymer in various ways. If the polymer is, for example, present in the form of an aqueous solution, the antifoam can be added in solid or dissolved form to the solution of the comb polymer. If the antifoam is not soluble in the aqueous polymer solution, emulsifiers or protective colloids can be added to stabilize it.

If the comb polymer is in the form of a solid as is obtained, for example, from spray drying or fluidized-bed spray granulation, then the antifoam can be mixed in as a solid or be processed together with the polymer in the spray drying process or spray granulation process.

### Further uses

A further aspect of the present invention is the use of a silicon dioxide composition as defined above or obtainable by the above-mentioned process as an adsorbent.

A further aspect of the present invention is the use of a silicon dioxide composition as defined above or obtainable by the above-mentioned process as or in a column material.

A further aspect of the present invention is the use of a silicon dioxide composition as defined above or obtainable by the above-mentioned process as or in a coating of inorganic or organic nanoparticles like precious metal nanoparticles, metal oxide nanoparticles or pigments.

A further aspect of the present invention is the use of a silicon dioxide composition as defined above or obtainable by the above-mentioned process as or in the active material of a catalyst.

A further aspect of the present invention is to embedding nanoparticles in the silicon dioxide composition as defined above or obtainable by the above-mentioned process. A further aspect of the present invention is the use of these silicon dioxide composition with embedded nanoparticles as or in a catalysis or controlled release.

A further aspect of the present invention is the use of a silicon dioxide composition as defined above or obtainable by the above-mentioned process as or in a catalyst support.

A further aspect of the present invention is the use of a silicon dioxide composition as defined above or obtainable by the above-mentioned process as a catalyst for epoxidation of olefins or for hydrocracking of large molecules.

A further aspect of the present invention is the use of a silicon dioxide composition as defined above or obtainable by the above-mentioned process as adsorbents for selective adsorption of gases or liquids, e.g. as stationary phase in High Performance Liquid Chromatography (HPLC).

The following examples are intended to further illustrate the present invention without limiting its scope in anyway.
- Figures 1:: The calcined powder showed a BET surface area of 1011 m²/g, a pore volume of 1.94 cm³/g and an average pore diameter of 7.66 nm.
- Figures 2:: The calcined powder showed a BET surface area of 914 m²/g, a pore volume of 1.01 cm³/g and an average pore diameter of 4.43 nm.
- Figures 3:: The calcined powder showed a BET surface area of 891 m²/g, a pore volume of 0.98 cm³/g and an average pore diameter of 4.10 nm.
- Figure 4:: The mesoporous silicon dioxide powder with embedded Ag nanoparticles
- Figure 5:: The mesoporous silicon dioxide powder with embedded Ag nanoparticles
- Figure A:: UV-Vis of hexane solution of IBU before (green) and after (mixed colors) addition of the mesoporous silica
- Figure B:: concentration decrease of IBU after addition of silica to the feed solution
- Figure C:: effect of the uptake (loading) of IBU by mesoporous silica as a function of concentration of feed solution
- Figure D:: uptake curve

### I. Analytics

The particle sizes given here are weight-average particle sizes, and they can be determined by dynamic light scattering, e.g. with Micgtrotrac Nanotrx 250 or Malvern ZetaSizer Nano

TEM-Analysis Philips (FEI) CM120 TEM

### II. Ingredients

Water glass solution

Cetyltrimethylammonium bromide (CTAB)

### III. Preparation

### Example 1: Preparation of mesoporous silicon dioxide powder

A solution of 1.6 g cetyltrimethylammonium bromide (CTAB) in 768 ml water was placed in round flask and heated to 80°C. Subsequently, 40 g of water glass (5 wt% SiO₂) were added under stirring within 30 minutes, during which time the pH was kept constant at 8.8 by addition of corresponding amount of 10 wt.-% nitric acid. After 2 h reacting at 80°C, the resulting suspension was filtered through a glass frit (1-1.6 µm mesh size) and washed once with 100 ml water and once with 100 ml ethanol. The powder was dried at 80°C overnight and calcined at 550°C under air for 2 hours (heating rate: 9°C/min).

The calcined powder showed a BET surface area of 1011 m²/g, a pore volume of 1.94 cm³/g and an average pore diameter of 7.66 nm. The powder consisted of particles having a particle size of 40 nm to 380 nm with mostly spherical shape, as can be seen in Fig, 1.

### Example 2: Preparation of mesoporous silicon dioxide powder

A solution of 1.6 g CTAB in 200 ml water was placed in round flask and heated to 80°C. Subsequently, 40 g of water glass (5 wt.-% SiO₂) were added under stirring within 10 minutes, during which time the pH was kept constant at 8.8 by addition of corresponding amount of 10 wt.-% nitric acid. After 2 h reacting at 80°C, the resulting suspension was filtered through a glass frit (1-1,6 µm mesh size) and washed once with 100 ml water and once with 100 ml ethanol. The powder was dried at 80°C overnight and calcined at 550°C under air for 2 hours (heating rate: 9°C/min).

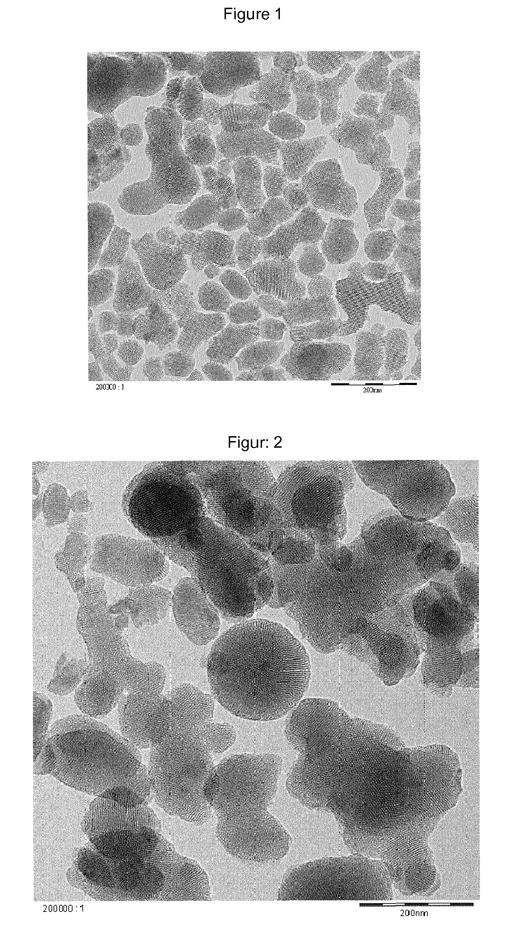

The calcined powder showed a BET surface area of 914 m²/g, a pore volume of 1.01 cm³/g and an average pore diameter of 4.43 nm. The powder consisted of particles having a particle size of 30 nm to 400 nm with mostly spherical shape, as can be seen in Fig. 2.

### Example 3: Preparation of mesoporous silicon dioxide powder with triethanolamine

A solution of 1.6 g CTAB in 768 ml water was placed in round flask and heated to 80°C. Subsequently, 40 g of water glass (5 wt.-% SiO₂) mixed with 30 g triethanolamine (TEA) were added under stirring within 30 minutes, during which time the pH was kept constant at 8.8 by addition of corresponding amount of 10 wt.-% nitric acid. After 2 h reacting at 80°C, the resulting suspension was filtered through a glass frit (1-1.6 nm mesh size) and washed once with 100 ml water and once with 100 ml ethanol. The powder was dried at 80°C overnight and calcined at 550°C under air for 2 hours (heating rate: 9°C/min).

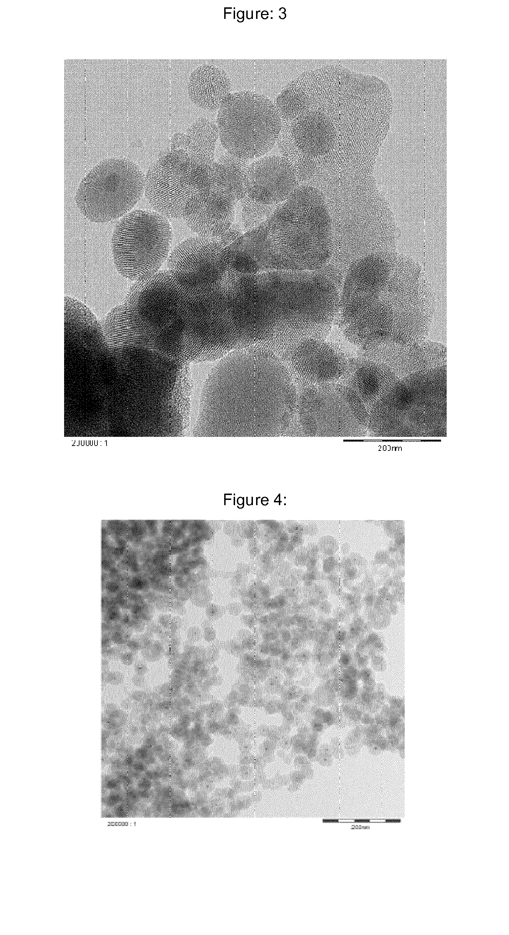

The calcined powder showed a BET surface area of 891 m²/g, a pore volume of 0.98 cm³/g and an average pore diameter of 4.10 nm. The powder consisted of particles having a particle size of 40 nm to 500 nm with mostly spherical shape, as can be seen in Fig. 3.

### Example 4: Preparation of mesoporous silicon dioxide powder with embedded Ag nanoparticles

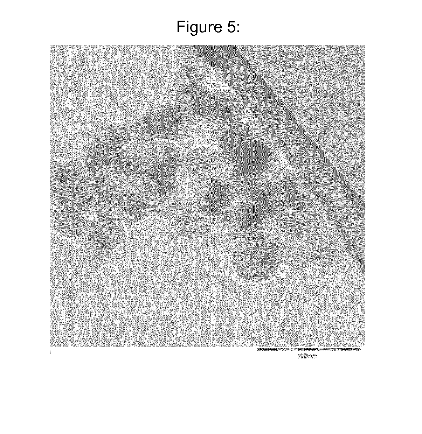

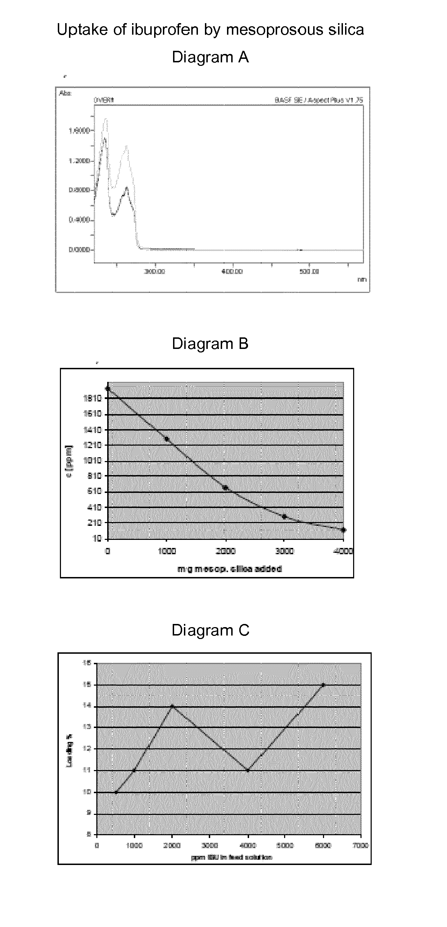

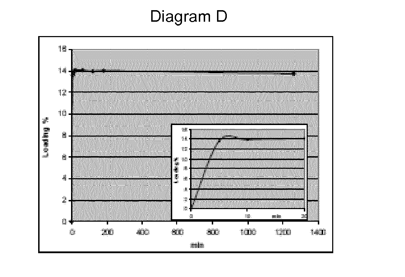

A solution of 1.6 g CTAB in 200 ml water was placed in round flask and heated to 80°C. Subsequently, the HAuCl₄/H₂O solution was introduced, under vigorous stirring (1 SiO₂:0.01-0.1 HAuCl₄ molar ratio), then 40 g of water glass (5 wt.-% SiO₂) were added under stirring within 10 minutes, during which time the pH was kept constant at 8.8 by addition of corresponding amount of 10 wt.-% nitric acid. After 2 h reacting at 80°C, the resulting suspension was filtered through a glass frit (1-1.6 µm mesh size) and washed once with 100 ml water and once with 100 ml ethanol. The powder was dried at 80°C overnight and calcined at 550°C under air for 2 hours (heating rate: 9°C/min). Figure 4 and 5 shows the prepared mesoporous silicon dioxide powder with embedded Ag nanoparticles.

### Example 5: Adsorption of ibuprofen from hexane solution

The ibuprofen was taken as a reference for investigation of the absorption properties of the mesoporous materials. Ibuprofen is able to bind to silica surface by means of hydrogen bridges with the hydroxyl groups present at the silica surface and thus achieve high loadings even from diluted ibuprofen solutions. Ibuprofen shows an absorption in the UV region and therefore its concentration in solution can be easily determined. The loading experiments were performed with ibuprofen solution in hexane. Decrease of the concentration of an ibuprofen in the solution was observed immediately after addition of the mesoporous silica powder. Constant concentration (equilibrium) was achieved within several minutes, indicating that the loading is a very fast process. The loading can be confirmed by means of e.g. TGA analysis.

## Claims

1. A process for the preparation of a silicon dioxide composition, which comprises mesoporous silicon dioxide particles, wherein
a) providing an aqueous solution comprising at least one surfactant (S) and
b) adding to the aqueous solution provided in step a) a water glass solution
and an acidifying agent (A),
wherein the addition is effected so that the pH of the resulting mixture is in a range from 6 to 9.

2. The process according to claim 1, wherein
- a target value for the pH of the resulting mixture is predefined,
- the actual value of the pH is determined,
- when a lower or higher limit for the deviation of the actual pH from the target value of the pH value of the resulting mixture is reached, the amount of acidifying agent (A) or water glass solution required for adjusting the pH value of the resulting mixture to the target value which is determined,
- the required amount of acidifying agent (A) or water glass solution is added to the aqueous solution by the use of an adjusting means for setting the dosing rate of the acidifying agent (A) and/or the water glass solution.

3. The process according to claim 1, wherein the pH is controlled by the dosing volume of the water glass solution and the acidifying agent (A) in step b).

4. The process according to claim 1, where the surfactant is a cationic surfactant.

5. The process according to claim 4, where the surfactant is a n-alkyltrimethylammonium halide.

6. The process according to claim 5, where the surfactant is selected from cetytrimethylammonium bromide, cetytrimethylammonium chloride or cetytrimethylammonium hydroxide.

7. The process according to claim 1, where the concentration of the surfactant in the aqueous solution provided in step a) is 0.1 to 15% by weight, preferably 0.2 to 5% by weight, particularly preferably 0.8 to 1.2% by weight, based on the total weight of the aqueous solution.

8. The process according to claim 1, wherein the water glass solution contains 0.1 to 35% by weight, preferably 1 to 30% by weight, in particular 5% to 25% by weight SiO₂, based on the total weight of the water glass solution.

9. The process according to claim 8, wherein the water glass solution comprises at least one metal oxide precursor, in particular at least one aluminate.

10. The process according to claim 1, wherein the acidifying agent (A) is selected from inorganic acids and acidic metal salts.

11. The process according to claim 10, wherein the acidifying agent (A) is selected from nitric acid, sulphuric acid, hydrochloric acid and phosphoric acid.

12. The process according to claim 1, wherein the weight ratio of the surfactant (S) of the aqueous solution provided in step a) to total amount of SiO₂ added with the water glass solution is 1:0.1 to 1:2, preferably 1:1.25.

13. The process according to any one of the preceding claims, wherein in step b) the temperature of the resulting mixture is kept in a range from 60°C to 95°C, preferably from 70°C to 90°C, particularly preferably from 75°C to 85°C.

14. The process according to claim 1, wherein in step b) the pH value of the resulting mixture is kept in a range of from 7 to 9, preferably in a range of from 7.5 to 8.9.

15. The process according to any one of the preceding claims, wherein the aqueous solution provided in step a) comprises at least one additive which is different from (A), (S) and (P), preferably selected from surface modifying agents, pore expanders, pH regulating agents and mixtures thereof.

16. The process according to claim 15, wherein the additive is selected from trimethylbenzenes, alkanolamines, polyalkyleneoxide polymers, fatty alcohols, electrolytes and mixtures thereof.

17. The process according to claim 1, wherein the aqueous solution provided in step a) comprises at least one particle (P) and/or at least one active agent (Z) which are different from mesoporous silicon dioxide particles wherein the particle (P) and/or the active agent (Z) are at least partly incorporated into the mesoporous silicon dioxide particles.

18. The process according to claim 17, wherein the particles (P) are selected from organic nanoparticles, inorganic nanoparticles, particles with catalytic activity, precursors thereof and mixtures thereof.

19. The process according to claim 17, wherein the active agent (Z) are selected from flame retardant additives, construction additives, hydrophobisation agent, dyes, encapsulated active agents, inorganic nucleation agents and mixtures thereof.

20. The process according to any one of the proceeding claims, comprising in addition
c) separation and/or purification of the silicon dioxide composition from the reaction mixture obtained in step b).

21. The process according to any one of the proceeding claims, wherein
d) the silicon dioxide composition in step c), if appropriate after a purification, is subjected to a drying, and
e) the dried silicon dioxide composition obtained in step d) is subjected to a calcination.

22. The process according to claim 21, where the calcination in step e) is carried out at a temperature of from 200 to 800°C, preferably from 250 to 700°C, in particular from 300 to 600°C.

23. The process according to any one of claims 21 or 22, wherein the calcination in step e) takes place in an inert atmosphere, oxidizing atmosphere or reducing atmosphere.

24. The process according to any one claims 21 to 23, wherein the calcination in step e) takes place in a first stage in an inert atmosphere and in a second stage in an oxidizing atmosphere.

25. The process according to any one of claims 21 to 24, wherein the calcination in step e) takes place in a first stage in an inert atmosphere and in a second stage in a reducing atmosphere.

26. A silicon dioxide composition obtainable by a process as defined in any one of claims 1 to 25.

27. A silicon dioxide composition according to claim 26 comprising or consisting of amorphous silicon dioxide particles.

28. A silicon dioxide composition according to claim 26 or 27, having an average particle diameter in the range from 20 to 500 nm, preferably from 50 to 250 nm.

29. A silicon dioxide composition according to any of claims 26 to 28, having an average pore size in the range from 1 to 25 nm, preferably from 2 to 10 nm.

30. Silicon dioxide composition according to any of claims 26 to 29, wherein the surface area of the silicon dioxide is in a range of 800 m²/g to 1350 m²/g, preferably at least in a range of 950 m²/g 1150 m²/g.

31. The use of a silicon dioxide composition obtainable by the process of any one of claims 1 to 26 or as defined in any of claims 27 to 30, as an adsorbent, as or in a column material, as or in a coating of nanoparticles, as or in the active material of a catalyst, as or in a catalyst support.
